# EUROPEAN PATENT APPLICATION

(11) **EP 3 251 732 A1**
(43) Date of publication of application: **06.12.2017**
(21) Application number: 16743695.5
(22) Date of filing: 28.01.2016
(51) Int. Cl.: A63F 9/02, A63F 13/46

(54) **SERVER AND DART GAME DEVICE FOR PROVIDING DART GAME IN ACCORDANCE WITH HITTING AREA ON BASIS OF LOCATION OF DART PIN, AND COMPUTER PROGRAM**

(30) Priority: 28.01.2015 KR 20150013427
(71) Applicant: Hong International Corp., Seoul 08390 (KR)
(72) Inventor: HONG, Sang Uk, Seoul 06075 (KR)
(74) Representative: Becker Kurig Straus
(86) International application number: PCT/KR2016/000902
(87) International publication number: WO 2016/122217

(57) **Abstract**

Disclosed is a computer program stored in a computer readable medium according to an exemplary embodiment of the present disclosure. The computer program includes commands which cause a computer to execute steps and the steps include: judging hitting locations of one or more dart pins which stick in a dart target having a plurality of score areas; calculating hitting areas of the dart pin based on the judged hitting locations of the dart pins; and calculating scores based on the hitting areas and a predetermined logic.

## Description

### TECHNICAL FIELD

The present disclosure relates to a dart game, and more particularly, to a dart game server, a dart game apparatus and a computer program which calculate a score based on a hitting area according to a location of a dart pin.

### BACKGROUND ART

In general, a dart means a 'small arrow' and a dart game is a game in which points are scored by throwing an arrow-shaped dart pin to a centrifugal target with numerical figures and has an advantage in that anyone can enjoy the dart game anywhere and anytime regardless of the season if only an arrowhead-shaped dart and a dart target are provided.

In general, participants of the dart game need to participate in the game at the same time and in the same space in order to enjoy the dart game. However, with the development of communication technology, electronic dart game apparatuses have been developed in which each of the participants of the dart game may remotely participate in the dart game so as to participate in the game over temporal and spatial constraints and remotely transmit his/her play result or play process through a communication network. The electronic dart game apparatuses may electrically sense a hitting point of the dart target and automatically aggregate scores and provide the aggregated scores to a user.

In recent years, while various game methods have been developed and a scoring method is established, and as a result, the dart game has been developed as worldwide leisure sport, all adults and children have conveniently enjoyed the dart game.

However, since the dart game is performed by a simple process in which the scores are aggregated by throwing the dart pin, various game methods may be developed and various scoring methods may be required in the art.

Therefore, there is a need for calculating the scores by using the hitting area based on the location of the dart pin in the art.

Simultaneously, in order to strengthen an entertainment element of the dart game, there is a need for providing various dart game play methods.

### SUMMARY OF THE INVENTION

The present disclosure has been made in an effort to calculate a score of a dart game in a more entertaining manner.

The present disclosure has been made in an effort to present various game methods of a dart game apparatus.

The present disclosure has been made in an effort to increase an entertainment element of the dart game.

An exemplary embodiment of the present disclosure provides a computer program stored in a computer readable medium. The computer program includes commands which cause a computer to execute steps and the steps may include: judging hitting locations of one or more dart pins which stick in a dart target having a plurality of score areas; calculating hitting areas of the dart pin based on the judged hitting locations of the dart pins; and calculating scores based on the hitting areas and a predetermined logic.

Another exemplary embodiment of the present disclosure provides a dart game server. The dart game server may include: a location identification unit judging a hitting location of a dart pin which sticks in a dart target area; a hitting area calculation unit calculating a hitting area of the dart pin according to the hitting location of the dart pin identified by the location identification unit; and a database unit storing dart game information and a predetermined logic for a plurality of missions for the dart game.

Yet another exemplary embodiment of the present disclosure provides a dart game apparatus. The dart game apparatus may include: a dart target having a plurality of score areas; a location identification unit judging hitting locations of one or more dart pins which stick in the dart target; a hitting area calculation unit calculating hitting areas of the dart pin based on the judged hitting locations of the dart pins; and a score calculation unit calculating scores based on the calculated hitting areas and a predetermined logic.

According to exemplary embodiments of the present disclosure, a score of a dart game can be calculated in a more entertaining manner.

According to the exemplary embodiments of the present disclosure, various game methods of a dart game apparatus can be presented.

According to the exemplary embodiments of the present disclosure, an entertainment element of a dart game can be increased.

### BRIEF DESCRIPTION OF THE DRAWINGS

Various aspects are now described with reference to the drawings and like reference numerals are generally used to designate like elements. In the following embodiments, for description purposes, multiple specific detailed matters are presented to provide general understanding of one or more aspects. However, it will be apparent that the aspect(s) can be executed without the detailed matters. In other examples, known structures and apparatuses are illustrated in a block diagram form in order to facilitate description of the one or more aspects.
FIG. 1 is a block diagram of a dart game apparatus according to an exemplary embodiment of the present disclosure.
FIG. 2 is a perspective view of the dart game apparatus according to the exemplary embodiment of the present disclosure.
FIG. 3 exemplarily illustrates a dart game system according to an exemplary embodiment of the present disclosure.
FIG. 4 is a flowchart for providing a dart game depending on a hitting area of a dart pin according to an exemplary embodiment of the present disclosure.
FIG. 5A exemplarily illustrates dart pins which stick in a dart target.
FIG. 5B exemplarily illustrates a first exemplary embodiment for calculating a hitting area based on a location of a dart pin.
FIG. 5C exemplarily illustrates the dart pins which stick in the dart target.
FIG. 5D exemplarily illustrates a second exemplary embodiment for calculating the hitting area based on the location of the dart pin.
FIG. 6 exemplarily illustrates a first exemplary embodiment of a dart game mode which may be provided to a player.
FIG. 7 exemplarily illustrates a second exemplary embodiment of the dart game mode which may be provided to the player.
FIG. 8 exemplarily illustrates a third exemplary embodiment of the dart game mode which may be provided to the player.
FIG. 9 exemplarily illustrates a fourth exemplary embodiment of the dart game mode which may be provided to the player.
FIG. 10 exemplarily illustrates a fifth exemplary embodiment of the dart game mode which may be provided to the player.
FIG. 11 exemplarily illustrates a sixth exemplary embodiment of the dart game mode which may be provided to the player.

### DETAILED DESCRIPTION

Various exemplary embodiments will now be described with reference to drawings and like reference numerals are used to refer to like elements throughout all drawings. In the present specification, various descriptions are presented to provide appreciation of the present disclosure. However, it is apparent that the exemplary embodiments can be executed without the specific description. In other examples, known structures and apparatuses are presented in a block diagram form in order to facilitate description of the exemplary embodiments.

"Component", "module", "system", and the like which are terms used in the specification refer to a computer-related entity, hardware, firmware, software, and a combination of the software and the hardware, or execution of the software. For example, the component may be a processing process executed on a processor, the processor, an object, an execution thread, a program, and/or a computer, but is not limited thereto. For example, both an application executed in a computing device and the computing device may be the components. One or more components may reside in the processor and/or the execution thread and one component may be localized in one computer or distributed among two or more computers. Further, the components may be executed by various computer-readable media having various data structures, which are stored therein. The components may perform communication through local and/or remote processing according to a signal (for example, data from one component that interacts with other components and/or data through another system and a network such as the Internet in a local system and a distribution system) having one or more data packets, for example.

The description of the presented exemplary embodiments is provided so that those skilled in the art of the present disclosure use or implement the present disclosure. Various modifications of the exemplary embodiments will be apparent to those skilled in the art and general principles defined herein can be applied to other exemplary embodiments without departing from the scope of the present disclosure. Therefore, the present disclosure is not limited to the exemplary embodiments presented herein, but should be analyzed within the widest range which is coherent with the principles and new features presented herein.

The terms "dart" and "dart pin" used in the specification may be often used to be exchanged with each other. Moreover, the terms "player" and "user" used in the specification may also be often used to be exchanged with each other. Moreover, the terms "play method" and "game mode" used in the specification may also be often used to be exchanged with each other. Moreover, the terms "score calculation" and "scoring method" used in the specification may also be often used to be exchanged with each other.

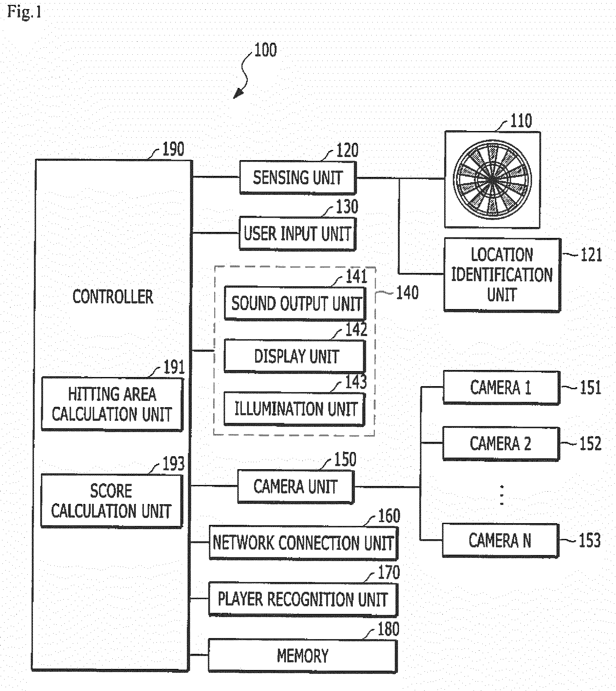

FIG. 1 is a block diagram of a dart game apparatus according to an exemplary embodiment of the present disclosure.

The dart game apparatus 100 may include a dart target 110, a sensing unit 120, a user input unit 130, an output unit 140, a camera unit 150, a network connection unit 160, a user recognition unit 170, a memory 180, a controller 190, and the like. The components illustrated in FIG. 1 are not required. Therefore, the dart game apparatus 100 having more components therethan or less components therethan may be implemented.

Hereinafter, the components will be described in sequence.

The dart target 110 may include a score board in which a bullseye is positioned at the center and there are areas segmented by a concentric circle centering the bullseye and straight lines extended radially from the bullseye and granted with individual scores, respectively. Multiple holes into which a tip of a dart may be inserted may be formed on the score board.

The dart target 110 includes a display unit 142 to be described below to variably change score deployments of the dart target 110 and shapes of areas granted with the scores. In this case, the dart target 110 includes a light transmissive touch pad in the display module 142 to be stacked to take a form of a touch screen.

The sensing unit 120 may sense a play of a dart game player performed with respect to the dart target 110. The sensing unit 120 may sense a hit location of a dart pin so as to actually evaluate the play of the game player. The sensing unit 120 may sense which area of the dart target 110 the thrown dart hits, with respect to a play in which the game player throws the dart. The sensing unit 120 electrically converts a score corresponding to the area in which the dart sticks to transmit the converted score to the controller 190.

A location identification unit 121 may identify positional information of the dart pin which sticks in the dart target 110 by interlocking with the sensing unit 120.

According to the exemplary embodiment of the present disclosure, the location identification unit 121 may judge the hitting location of the dart pin based on a location identification module included in the dart pin. Furthermore, the location identification unit 121 may judge the hitting location of the dart pin based on a receiving groove of the dart target corresponding to the dart pin which sticks. For example, the location identification unit 121 may identify the hitting location of the dart pin based on a location coordinate granted to each receiving groove of the dart target 110. That is, respective receiving grooves of the dart target 110 may exist while being granted with positional information such as (1,3), (2, 17), (45, 93), (16, 30), etc. Accordingly, when it is sensed that the dart pin hits each receiving groove, the location of the dart pin may be identified by the positional information. The aforementioned contents are only an example according to the exemplary embodiment of the present disclosure and various methods may be used for identifying the location of the dart pin.

Optionally or alternatively, the location identification unit 121 may be included in the controller 190.

In the exemplary embodiment of the present disclosure, the sensing unit 120 may allow the controller 190 to calculate the hitting area at least partially based on information regarding a location where the dart pin identified by the location identification unit 121 directly hits the dart target 110 and a predetermined logic stored in the memory 180. The hitting area may be calculated as an area of a figure formed by connecting the hitting locations of the dart pins. Alternatively, the hitting area may be calculated based on a segment of the dart target corresponding to the dart pin which sticks in the dart target.

The user input unit 130 receives an input of the user for controlling the dart game apparatus 100. The user input unit 130 may include a keypad, a dome switch, a touch pad (resistive/capacitive), a jog wheel, a jog switch, and the like. The user input unit 130 may also include cameras 151 to 153, a microphone, or the like.

The user input unit 130 may also include a short range communication module (not illustrated). The user input unit 130 may be configured to include the short range communication module (not illustrated) of the network connection unit 160. When the user input unit 130 includes the short range communication module of the network connection unit 160, the user input unit 130 may be configured to receive a user input which is input by an external console device. As short range communication technology, Bluetooth, radio frequency identification (RFID), infrared data association (IrDA), ultra wideband (UWB), ZigBee, or the like may be used.

For example, when the user input unit 130 performs the short range communication using infrared communication, the external console device may be an infrared remote controller. Alternatively, when the user input unit 130 performs the short range communication using a Bluetooth function, the external console device may be a mobile device including a Bluetooth module. The mobile device including the Bluetooth module may be, for example, a smart phone including the Bluetooth module.

The user may select a dart game mode, the number of dart game players, a dart game play mode, a match making request, a match approval, and the like through the user input unit 130.

For example, the user may select the number of dart game players, the dart game play mode (a zero one game, a cricket game, and the like), and the dart game mode (a single play, a network play, and the like) through the user input unit 130. Further, according to an exemplary embodiment of the present disclosure, the user may select a virtual dart game player through the user input unit 130.

The user input unit 130 receives a signal by sensing a key operation or a touch input of the user or receives speech or a motion through the cameras 151 to 153 or the microphone of the user to convert the received signal, speech, or motion into an input signal. To this end, a known speech recognition technology or a motion recognition technology may be used.

The output unit 140 which is used for generating an output related with sight, hearing, or touch may include a sound output unit 141, a display unit 142, an illumination unit 143, and the like.

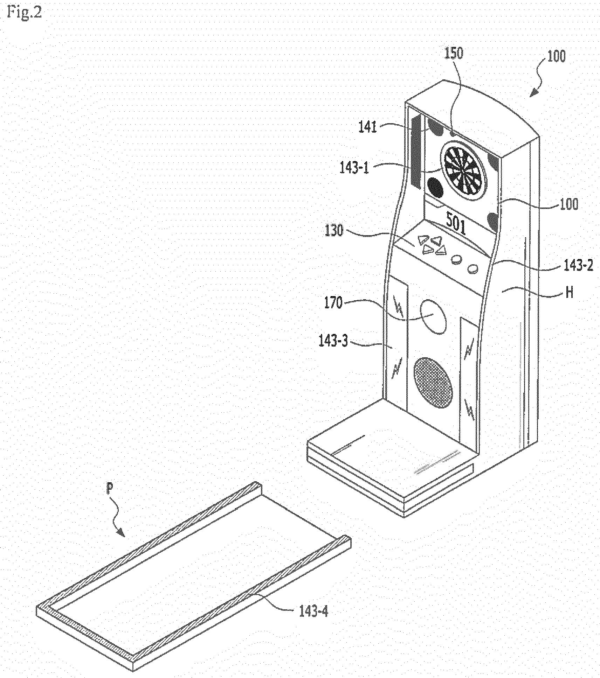

The sound output unit 141 may output audio data received from the network connection unit 160 or stored in the memory 180 in a game sound effect, a game motion guide, a game method description, and the like. The sound output unit 141 may also output a sound signal related with a function (e.g., a game effect sound) performed by the dart game apparatus 100. The sound output unit 141 may also output a speech of a game player or a third person using another dart game apparatus 100 (see FIG. 2), which is received through the network connection unit 160. The sound output unit 141 may include a receiver, a speaker, a buzzer, and the like.

The display unit 142 displays (outputs) information processed in the dart game apparatus 100 (see FIG. 2). For example, when the dart game apparatus 100 (see FIG. 2) is in a game play mode guidance mode, the display unit 142 may output a selectable game play mode. When the dart game apparatus 100 (see FIG. 2) plays a game, the display unit 142 may display the score sensed through the sensing unit 120 or output an image acquired by photographing the game player or the third person using another dart game apparatus 100 (see FIG. 2) received through the network connection unit 160.

The display unit 142 may output information on various dart games according to the hitting area based on the location of the dart pin according to the exemplary embodiment of the present disclosure. For example, the display unit 142 may output information on a throwing point of the dart pin so as to allow the dart game player to throw the dart pin to a specific area or a specif location.

The display unit 142 may graphically generate the hitting area formed by connecting the dart pins which stick in the dart target 110 and provide the graphically generated hitting area. For example, an image showing that a triangular area is formed by connecting three dart pins may be output. Furthermore, the display unit 142 may display contents regarding information (e.g., score calculation information, etc.) on the calculated hitting area.

In the case where three dart pin throwing opportunities per one throwing opportunity is given to the dart game player, which location the dart game player may acquire an advantageous score at the time of hitting may be provided as an animation effect based on locations in which two previously thrown dart pins stick. For example, an effect of flickering a specific location by enlarging a specific segment may be provided through the display unit 142.

The display unit 142 may include at least one of a liquid crystal display (LCD), a thin film transistor-liquid crystal display (TFT LCD), an organic light-emitting diode (OLED), a flexible display, and a 3D display.

Some of the displays may be configured as a transparent or light transmissive type to view the outside through the displays. This may be called a transparent display and a representative example of the transparent display includes a transparent OLED (TOLED), and the like.

According to an implementation form of the dart game apparatus 100, two or more displays 142 may exist. For example, in the dart game apparatus 100, the plurality of displays may be separated from each other or integrally disposed on one surface, and further, disposed on different surfaces, respectively. For example, the display unit 142 may include both a display 142 disposed at an upper end of the dart target 110 and a display disposed at a lower end of the dart target 110, or may include one display 142 thereof. However, the location where the aforementioned display is disposed is an example, and the display may be disposed at various locations for a demand due to a design or a visual effect.

The touch sensor may be configured to convert a change in pressure applied to a specific portion of the display unit 142 or capacitance generated at the specific portion of the display unit 142 into an electrical input signal. The touch sensor may be configured to detect touch pressure as well as a touched position and area.

When there is a touch input for the touch sensor, a signal(s) corresponding to the touch input is(are) sent to a touch controller. The touch controller processes the signal(s) and thereafter, transmits data corresponding thereto to the controller 190. As a result, the controller 190 may know which area of the display 142 is touched.

The illumination unit 143 outputs a signal for notifying occurrence of an event of the dart game apparatus 100. Examples of the event which occurs from the dart game apparatus 100 include identification of the dart game player, direct hit of the dart, a change of the dart game player, game over, and the like. The illumination unit 143 may include a light emission diode (LED) and notify the occurrence of the event to the user by flickering the LED.

The LEDs are disposed on the bottom of the dart target 110 to be flickered according to a flickering pattern which is pre-stored according to the occurrence of the event. For example, one or more LEDs may be allocated to respective parts of the dart target 110. The allocated LEDs are disposed on the bottom of the dart target 110 and may be disposed in a direction orienting the outside of the dart game apparatus 100. When the LEDs irradiate light, the light irradiated by the LEDs may pass through the dart target 110 made of a transparent or translucent material to transfer a visual output to the user. Alternatively, the light irradiated by the LEDs may transfer the visual output to the user through a gap existing in the dart target 110.

The output unit 140 may also output another form other than a video signal or an audio signal, for example, a signal for notifying the occurrence of the event by vibration. The output unit 140 may include the sound output unit 141, the display unit 142, and the illumination unit 143.

The camera unit 150 includes multiple cameras 151 to 153 and an infrared camera (not illustrated), and as a result, an image frame processed by the cameras 151 to 153 may be stored in the memory 180 or transmitted to the outside through the network connection unit 160. Two or more cameras 150 may be provided according to a use environment.

In the aspect of the present disclosure, the camera unit 150 may be disposed to photograph the dart pins which stick in the dart target 110. For example, the camera unit 150 may be positioned on the bottom of the dart target. Alternatively, the camera unit 150 may be positioned at one area to photograph a direction of the dart target 110 in a housing H (see FIG. 2) on which the dart game apparatus is mounted. In an aspect of the present disclosure, the camera unit 150 may include multiple cameras 151 to 153.

The location identification unit 121 and the controller 190 may calculate the hitting area corresponding to the location of the dart pin by analyzing the location of the dart pin photographed through the camera unit 150. To this end, an image capturing technology may be used. That is, the location of the dart pin may be identified based on an image acquired by capturing the image photographed through the camera unit 150 photographing the dart target 110. The hitting area may be calculated through the identified throwing locations of the dart pins. To this end, various image processing technologies may be used.

At least some cameras of the camera unit 150 may be disposed to photograph an image frame including the dart target 110 and other cameras may be disposed to photograph an image frame directly related with a game rule in the dart game play. For example, the camera may be disposed to photograph a throw-line on which the dart is thrown in order to photograph the image frame directly related with the dart game rule. The multiple cameras included in the camera unit 150 may be disposed to photograph at least some image frames to overlap with each other.

When the camera unit 150 includes one camera, the camera may be a panoramic camera disposed to photograph both at least a part of the dart target 110 and the image frame (e.g., the throw-line in the dart game) directly related with the game rule.

The network connection unit 160 may include one or more modules that enable wireless communication between the dart game apparatus 100 and a wired/wireless communication system or between the dart game apparatus 100 and a network on which the dart game apparatus 100 is positioned.

The network connection unit 160 may include one or more modules which enable communication with the dart game apparatus 100 and/or the dart pin (not illustrated).

The network connection unit 160 may include a wired/wireless Internet module for accessing the network. As the wireless Internet technology, wireless LAN (WLAN) (Wi-Fi), wireless broadband (Wibro), world interoperability for microwave access (Wimax), high speed downlink packet access (HSDPA), or the like, may be used. As wired Internet technology, digital subscriber line (XDSL), fibers to the home (FTTH), power line communication (PLC), or the like may be used.

The network connection unit 160 includes a short-range communication module to transmit and receive data to and from an electronic apparatus positioned in a comparatively short range from the dart game apparatus 100 and including the short-range communication module. As short range communication technology, Bluetooth, radio frequency identification (RFID), infrared data association (IrDA), ultra wideband (UWB), ZigBee, or the like may be used.

The network connection unit 160 may sense a connection state of the network and a transceiving speed of the network.

Data received through the network connection unit 160 may be output through the output unit 140, stored through the memory 180, or transmitted to other electronic apparatuses positioned in a short range through the short-range communication module.

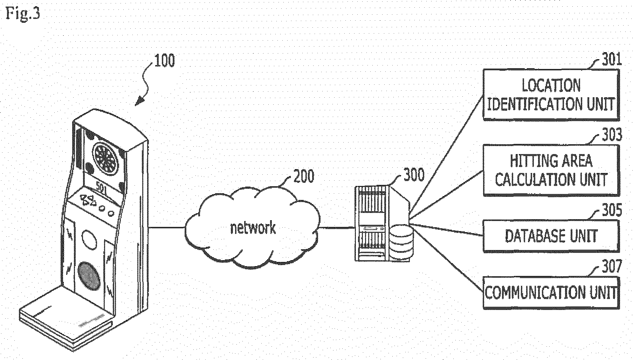

The network connection unit 160 may receive information for calculating the score by using the location of the dart pin from the dart game apparatus 100. Alternatively, the network connection unit 160 may receive the positional information from the dart pin. Further, the network connection unit 160 may include at least one of the number of throwing times of the dart pin, which remain in the throwing opportunity of the dart game player to the dart game apparatus 100, a progress situation of the dart game, a scoring situation of the dart game player, a measured speed of the dart pin, a throwing order of the dart game player, information on the dart game player, and information on a counterpart player of the dart game player. The aforementioned information is just an example and the dart game server 300 (see FIG. 3) may transmit/receive all types of information associated with the dart game apparatus 100 and the dart game.

The network connection unit 160 may receive user identification information from the dart game apparatus 100.

The user recognition unit 170 recognizes unique information of a long-range user by using a radio wave through the radio frequency identification (RFID) technology which is a kind of the short range communication technology. For example, the user may possess a card, a mobile terminal, or unique dart game equipment, for example, his/her own personal dart equipment, which includes an RFID module. Information (e.g., a personal ID, an identification code, and the like of the user registered in the server (DB) (see FIG. 3)) for identifying the user may be recorded in the RFID module possessed by the user. The dart game apparatus 100 may identify the RFID module possessed by the user to identify a dart game player which plays the game by using the dart game apparatus 100 and update a database for the identified dart game player or accumulate new data.

The user recognition unit 170 may include various technologies (e.g., the short-range communication technology such as the Bluetooth, and the like) that may transmit and receive unique information of the user by a contact/non-contact method in addition to the RFID technology. Further, the user recognition unit 170 may include a biodata identification module that identifies biodata (speech, a fingerprint, and a face) of the user by interworking with the microphone of the user input unit 130, the touch pad, the camera unit 150, and the like.

The memory 180 may store a program for a motion of the controller 190 therein and temporarily store input/output data (e.g., a phone book, a message, a still image, a moving picture, or the like) therein. The memory 180 may store data regarding various patterns of vibrations and sounds output in the touch input on the touch screen.

The memory 180 may store various data for calculating the score according to the hitting area based on the location of the dart pin. For example, various logics for calculating the hitting area may be stored in the memory 180. For example, algorithms for calculating the area of the figure may be stored in the memory 180 in order to acquire the area of the figure formed by connecting the locations of the dart pins.

In an additional aspect of the present disclosure, a predetermined logic may be stored in the memory 180 in order to calculate the score according to the location and the hitting area of the dart pin.

In the predetermined logic it is may be characterized in that as the hitting area formed by the dart pin increases, an additional point may be granted. According to another exemplary embodiment of the present disclosure, in the predetermined logic, it is may be characterized in that as the hitting area formed by the dart pin decreases, the additional point may be granted.

Alternatively, in the predetermined logic, it is may be characterized in that the hitting area formed by the dart pin thrown by a first player may be determined as a score area in which the score is granted only to the first player within a predetermined period. Furthermore, in the predetermined logic, it is may be characterized in that the hitting area formed by the dart pin thrown by the first player may be determined as a score area in which a weighted value is granted to the first player within a predetermined period.

In the predetermined logic according to the additional aspect of the present disclosure, it is may be characterized in that when the dart pin thrown from a second player sticks in the hitting area formed by the dart pin thrown by the first player, a penalty is granted to the second player. Further, in the predetermined logic, it is may be characterized in that as the hitting area is formed by the dart pin thrown to a predetermined location of the dart target, the weighted value may be granted.

The memory 180 may include at least one type of storage medium of a flash memory type storage medium, a hard disk type storage medium, a multimedia card micro type storage medium, a card type memory (for example, an SD or XD memory, or the like), a random access memory (RAM), a static random access memory (SRAM), a read-only memory (ROM), an electrically erasable programmable read-only memory (EEPROM), a programmable read-only memory (PROM), a magnetic memory, a magnetic disk, and an optical disk. The dart game apparatus 100 may operate in connection with a web storage performing a storing function of the memory 180 on the Internet.

The controller 190 generally controls all motions of the dart game apparatus 100. For example, in the case of the dart game, a direct hitting location of the dart pin may be sensed at least partially based on a signal received from the sensing unit 120 and the score corresponding to the sensed direct hitting location may be aggregated for each game participant. The controller 190 may perform the dart game based on the score aggregated for each game participant.

The controller 190 may perform pattern recognition processing to recognize a motion input, a writhe input, and the like performed on the touch screen or camera as a text or an image. Further, the controller may perform speech recognition by using a speech-to-text (STT) function to recognize the speech input through the microphone as the text.

The controller 190 may include a hitting area calculation unit 191 and a score calculation unit 193.

The hitting area calculation unit 191 may calculate the hitting area of the dart pin based on the hitting location of the dart pin, which is judged by the location identification unit 121. For example, the area of the figure formed by connecting the hitting locations of the dart pins which stick in the dart target 110 may be calculated. To this end, algorithms for calculating the area of the figure may be used.

Alternatively, the hitting area may be calculated based on the segment of the dart target 110 corresponding to the dart pin which sticks. Additionally, the hitting area of the dart pin may be calculated according to a predetermined logic.

Alternatively, referring to the above description, in more detail, the dart game apparatus 100 may map location coordinate values (x,y) in respective receiving grooves of the segments of the dart target 110. When the dart pin reaches a specific receiving groove of the dart target, the sensing unit 120 may sense which receiving groove the dart pin reaches. Furthermore, the sensing unit 120 may transfer information on the sensed receiving groove to the location identification unit 121. The location identification unit 121 may judge the mapped coordinate value corresponding to the sensed receiving groove. When throwing three or more dart pins is completed, the hitting area calculation unit 191 may calculate the hitting area formed by the dart pin based on the coordinate values judged to correspond to the location which the dart pin reaches.

A camera is installed at a location to photograph the dart target 110 in association with the dart game apparatus, and as a result, the camera unit 150 may photograph and/or capture the location which the dart pin reaches. When throwing three or more dart pins is completed, the camera unit 150 may capture locations which the dart pins reach and transfer a captured image to the area calculation unit 191. The area calculation unit 191 may calculate the hitting area by the dart pin through image processing of the captured image.

The score calculation unit 193 may include the score calculation unit 193 that calculates the score based on the hitting area calculated by the hitting area calculation unit 191 and the predetermined logic. As a result, the controller 190 may provide the dart game score according to the hitting area based on the location of the dart pin to the dart game player.

When the controller 190 senses that a capacity of the memory is exceeded, the controller 390 may allow data to be deleted in the oldest data order among the data stored in the memory 180. For example, the controller 190 may allow an image to be deleted in the oldest image order among photographed data photographed and stored by the camera unit 150.

The controller 190 may control the memory 180 to delete unloaded data after a predetermined time period. For example, the controller 190 may control the memory 180 to delete photographed data which is not loaded within 6 months after a specific time period.

As illustrated in FIG. 1, since the controller 190 may communicate with all of the above-mentioned other components, the controller 190 may organically control operations of the respective components.

Various embodiments described herein may be implemented in a computer-readable recording medium or a recording medium readable by a device similar to the computer by using, for example, software, hardware, or a combination thereof.

According to hardware implementation, the embodiment described herein may be implemented by using at least one of the application specific integrated circuits (ASICs), the digital signal processors (DSPs), the digital signal processing devices (DSPDs), the programmable logic devices (PLDs), the field programmable gate arrays (FPGAs), the processors, the controllers, the micro-controllers, the microprocessors, and the electric units for performing other functions. In some cases, the embodiments described in the specification may be implemented by the controller 190 itself.

According to software implementation, embodiments such as a procedure and a function described in the specification may be implemented by separate software modules. Each of the software modules may perform one or more functions and operations described in the specification. A software code may be implemented by a software application written by an appropriate program language. The software code may be stored in the memory 180 and executed by the controller 190.

FIG. 2 is a perspective view of a dart game apparatus according to an exemplary embodiment of the present disclosure.
As illustrated in FIG. 2, the dart game apparatus 100 according to the exemplary embodiment of the present disclosure may be formed by mounting the components illustrated in FIG. 1 in a housing H. A dart target 110, a display unit 142, an illumination unit 143, a sound output unit 141, a camera unit 150, and a user recognition unit 170 may be disposed on the front surface of the dart game apparatus 100.

The dart target 110 may be disposed so that a dead center is positioned at a position (for example, 5 feet 8 inches in a vertical direction from the ground) which conforms with a rule of the dart game. The illumination units 143-1, 143-2, and 143-3 may be disposed at various parts of the dart game apparatus 100 to transfer a visual effect to the player of the dart game apparatus 100.

For example, the illumination unit 143-1 is disposed at the side of the dart target 110 and may serve to irradiate an illumination to the dart target 110. The illumination unit 143-1 may also output a predetermined illumination effect according to an event of the dart game. Further, the illumination unit 143-1 may output illumination effects having various colors.

The illumination unit 143-2 may be formed to be extended in a vertical direction along a forward projection of the housing H. Like the illumination unit 143-1, the illumination unit 143-2 may output a predetermined illumination effect according to an event of the dart game and output illumination effects having various colors.

The illumination unit 143-3 may be disposed on the side of the user recognition unit 170. The illumination unit 143-3 may output a predetermined illumination effect according to an event of the dart game and output illumination effects having various colors. Particularly, the illumination unit 143-3 may output an illumination effect for an event related with the user recognition unit 170.

Optionally, the dart game apparatus 100 may include a dart plate P which may be selectively connected with the dart game apparatus 100 and is extended in a horizontal direction. The dart plate P may further include an illumination unit 143-4. The dart plate P may be integrally coupled with or selectively attached to or detached from the dart game apparatus 100.

When the dart plate P is integrally coupled with or selectively attached to the dart game apparatus 100, the dart plate P may be electrically connected with the dart game apparatus 100. The illumination unit 143-4 of the dart game apparatus 100 may be disposed along the outside of the dart plate P as illustrated in FIG. 3. One end of the dart plate P may be extended to a place where a throw-line is to be positioned according to a distance of the throw-line from the dart target according to a rule of the game. The illumination unit 143-4 may be disposed at a position corresponding to the throw-line.

Although not illustrated in FIG. 2, an illumination unit (not illustrated) is disposed at the bottom of the dart target 110 to irradiate an illumination effect in a user direction. The illumination unit (not illustrated) may include a combination of different illumination elements allocated according to each segment configuring the dart target.

For example, the illumination unit (not illustrated) is disposed at the bottom of the dart target 110 to irradiate an illumination effect in a user direction through a predetermined segment. For example, the illumination unit may output the illumination effect so as to allow the dart game player to throw the dart pin to a specific area. Therefore, the dart game player may set a throwing point of the dart pin. For example, the illumination effect may be output to a segment corresponding to an area of triple 3. Alternatively, the illumination effect may be output to segments corresponding to areas of double 5 and double 17.

The housing H of the dart game apparatus 100 may include the display unit 142 disposed in the user direction. The display unit 142 may display information required for the user according to the progress of the dart game (for example, a collected score, information on a player which is playing the game, a score required for clearing the corresponding game, information of an opponent player which does not play the game, and the like). The display 142 may display a visual effect according to an event depending on the progress of the dart game. For example, when the user continuously hits a bullseye at the dead center of the dart target 100 with three dart throw opportunities, the display unit 142 may display a pre-stored motion picture corresponding to the corresponding event. The motion picture may be stored in the memory 180 of the dart game apparatus 100 or received from a server through the network connection unit 160.

The display unit 142 may provide the user with visual and audible effects according to occurrence of the event by interlocking with the illumination units 143-1, 143-2, 143-3, and 143-4 and the sound output unit 141. In other words, when a predetermined event occurs, the display unit 142, the illumination units 143-1, 143-2, 143-3, and 143-4, and the sound output unit 141 may output an illumination effect, a display effect, and a sound effect with respect to the corresponding event together.

In FIG. 2, it is illustrated that the display unit 142 are disposed at the lower end of the dart target 110, but the number and disposed positions of displays 142 may be variously modifed.

The user input unit 130 may be configured in a key pad button form as illustrated in FIG. 2. However, as described above, the user input unit 130 may be configured by various types including a touch screen. The user operates a key button of the user input unit 130 to select a mode of a game to be played by the user, and the like.

The sound output unit 141 is also disposed on the front surface of the housing H of the dart game apparatus 100 to output a sound. The number and disposed positions of sound output units 141 may also be variously modified.

The camera unit 150 may be mounted on the top of the housing H of the dart game apparatus 100 as illustrated in FIG. 2. The camera unit 150 may include one or more cameras 151 to 153 which may photograph the dart target 110 and the throw line. The image photographed through the camera unit 150 may be transferred to the memory 180. In some embodiments, only some of the motion pictures photographed by the camera unit 150 may be finally stored in the memory 180 or transferred to the server 300 (see FIG. 3) through the network connection unit 160.

Although not illustrated in FIG. 2, an infrared camera unit (not illustrated) may be installed above the housing of the dart game apparatus 100 and on a ceiling and left and right walls of a space in which the dart game apparatus 100 is installed. Further, in order to more accurately measure the location of the dart pin which directly hits the dart target, a plurality of cameras may be set at various locations of the dart game apparatus 100.

The user recognition unit 170 may be disposed on the front surface of the housing H of the dart game apparatus 100 and include a short range communication module as illustrated in FIG. 2. The user touches at least one of a card and a wearable device for recognizing the user near the user recognition unit 170 to complete user authentication.

The contents illustrated in FIG. 2 and the description of the exterior of the aforementioned dart game apparatus 100 are just an example proposed for description, and the dart game apparatus 100 according to the present disclosure is not limited to the exterior illustrated in FIG. 2.

FIG. 3 exemplarily illustrates a dart game system according to an exemplary embodiment of the present disclosure.

As illustrated in FIG. 3, the dart game apparatus 100 may be connected with the dart game server 300 through a network 200.

That is, the network 200 according to the exemplary embodiment of the present disclosure may connect the dart game apparatus 100 and the dart game server 300 as a wired/wireless communication network. Furthermore, compatible UEs (not illustrated) including a cellular phone, a tablet, other PDAs, a portable multimedia device, a PC, and the like of the player may be connected with a user terminal device.

Each dart game apparatus 100, each user terminal device, and each dart game server 300 may exchange information thereamong according to a predetermined communication protocol. Further, the network 200 connecting each of the servers and the user terminal device need not particularly be a single network. The network may be a LAN, a WAN, an Intranet or the Internet, or a combination thereof, which enables communication between multiple computing devices. Moreover, the network 200 may include a wireless, wired, or wireless and wired association and connection. Additionally, techniques including VPN, and the like may be used to reinforce the security.

As illustrated in FIG. 3, the dart game server 300 may be constituted by a location identification unit 301, a hitting area calculation unit 303, a database unit 305, and a communication unit 307. The aforementioned contents are just an example for configuring the dart game server 300 according to the exemplary embodiment of the present disclosure and various components may additionally exist.

According to the exemplary embodiment of the present disclosure, the location identification unit 301 may judge the hitting location of the dart pin which sticks in the dart target area. For example, the location identification unit 301 may judge the hitting location of the dart pin based on the location identification module included in the dart pin. Alternatively, the hitting area may be judged based on a receiving groove of the dart target corresponding to the dart pin which sticks in the dart target. Optionally or alternatively, a direct hitting scene of the dart pin photographed by the camera unit 150 (see FIG. 1) is analyzed to judge the hitting location.

The hitting area calculation unit 303 according to the exemplary embodiment of the present disclosure may calculate the hitting area of the dart pin based on the hitting location of the dart pin, which is identified by the location identification unit 301.

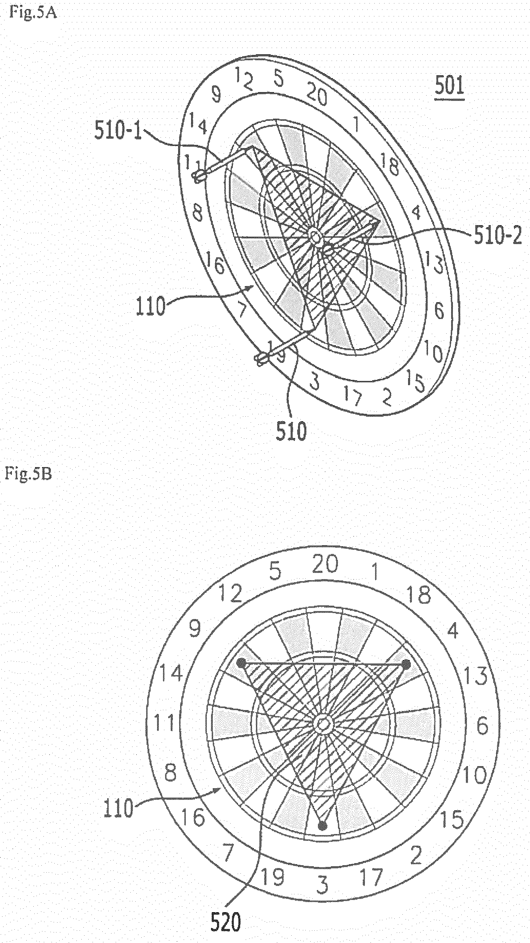

The hitting area may be calculated as an area of a figure formed by connecting the hitting locations of the dart pins. Alternatively, the hitting area may be calculated based on the segment of the dart target corresponding to the dart pin which sticks in the dart target. This will be described below in FIGS. 5A to 5D.

The database unit 305 may store dart game information and a predetermined logic for a plurality of missions for the dart game. Further, the database unit 305 may store a predetermined logic for calculating the score. The database unit 305 may store various data for calculating the score according to the hitting area based on the location of the dart pin.

In an additional aspect of the present disclosure, a predetermined logic may be stored in the database unit 305 in order to calculate the score according to the location and the hitting area of the dart pin. For example, various logics for calculating the hitting area may be stored in the database unit 305. For example, equations for calculating the area of the figure may be stored in the database unit 305 in order to acquire the area of the figure formed by connecting the locations of the dart pins.

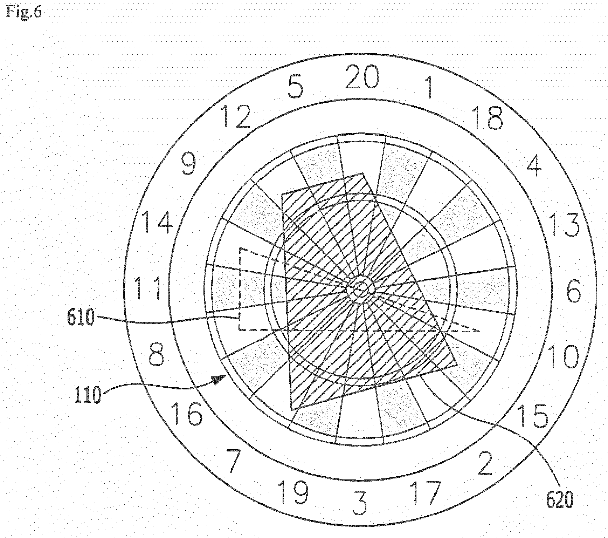

The dart game server 300 may further include a score calculation unit (not illustrated). Therefore, the score may be calculated based on the calculated hitting area and the predetermined logic. This will be described below in FIGS. 6 to 10.

In one aspect of the present disclosure, the database unit 305 may include at least one type of storage medium of a flash memory type storage medium, a hard disk type storage medium, a multimedia card micro type storage medium, a card type memory (for example, an SD or XD memory, or the like), a random access memory (RAM), a static random access memory (SRAM), a read-only memory (ROM), an electrically erasable programmable read-only memory (EEPROM), a programmable read-only memory (PROM), a magnetic memory, a magnetic disk, and an optical disk. In an additional aspect of the present disclosure, the dart game server 300 may operate in connection with a web storage performing a storing function of the database unit 305 on the Internet.

The dart game server 300 may manage a group of one or more dart game apparatuses and communicate with the dart game apparatus 100, the terminal device, and/or another server through the communication unit 307. The terminal device may be a cellular phone, a tablet, and other compatible UE (not illustrated) such as the PDA, the portable multimedia device, the PC, and the like.

The communication unit 307 transmits and/or receives various information performed in the dart game. For example, at least one information of dart game mode selection information, rating information of the dart game player, point per dart (PPD) information of the dart game player, and mark per round (MPR) information of the dart game player may be transmitted and/or received.

The communication unit 307 may be implemented in the form of a communication module that receives various information and data including the matching request information from the dart game apparatus 100, the cellular phone, the tablet, and other compatible UE (not illustrated) such as the PDA, the portable multimedia device, the PC, and the like via a wired/wireless communication scheme.

As one example, as the wireless Internet technology, wireless LAN (WLAN) (Wi-Fi), wireless broadband (Wibro), world interoperability for microwave access (Wimax), high speed downlink packet access (HSDPA), or the like, may be used. As one example, as wired Internet technology, digital subscriber line (XDSL), fibers to the home (FTTH), power line communication (PLC), or the like may be used.

The communication unit 307 includes a short-range communication module to transmit/receive data to/from an electronic apparatus including the short-range communication module. As short range communication technology, Bluetooth, radio frequency identification (RFID), infrared data association (IrDA), ultra wideband (UWB), ZigBee, or the like may be used.

Modules for recognizing and searching identification information of the player may further exist in the dart game server 300 according to the additional exemplary embodiment of the present disclosure in addition to the location identification unit 301, the hitting area calculation unit 303, the database unit 305, and the communication unit 307. Furthermore, the location identification unit 301, the hitting area calculation unit 303, and the score calculation unit (not illustrated) may be collectively referred to as a controller (not illustrated).

Various exemplary embodiments described in the present specification may be implemented in a computer-readable recording medium or storage medium or a recording medium or storage medium readable by a device similar to the computer by using, for example, software, hardware, or a combination thereof.

For example, according to hardware implementation, the exemplary embodiment described herein may be implemented by using at least one of the application specific integrated circuits (ASICs), the digital signal processors (DSPs), the digital signal processing devices (DSPDs), the programmable logic devices (PLDs), the field programmable gate arrays (FPGAs), the processors, the controllers, the micro-controllers, the microprocessors, and the electric units for performing other functions. In some cases, the exemplary embodiments described in the specification may be implemented by a controller (not illustrated) itself.

As another example, according to software implementation, exemplary embodiments such as a procedure and a function described in the specification may be implemented by separate software modules. Each of the software modules may perform one or more functions and operations described in the specification. A software code may be implemented by a software application written by an appropriate program language. The software code may be stored in the database unit 305 and executed by the controller (not illustrated).

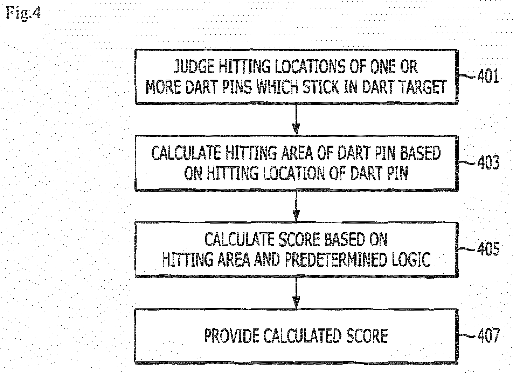

FIG. 4 is a flowchart for providing a dart game depending on a hitting area of a dart pin according to an exemplary embodiment of the present disclosure.

Hereinafter, a process for providing the dart game according to the hitting area of the dart pin will be described in brief.

According to the exemplary embodiment of the present disclosure, the dart game apparatus 100 or the dart game server 300 may judge the hitting locations of one or more dart pins which stick in the dart target (S401). The hitting location of the dart pin may be judged based on the location identification module included in the dart pin. Alternatively, the hitting location of the dart pin may be judged based on the receiving groove of the dart target corresponding to the dart pin which sticks.

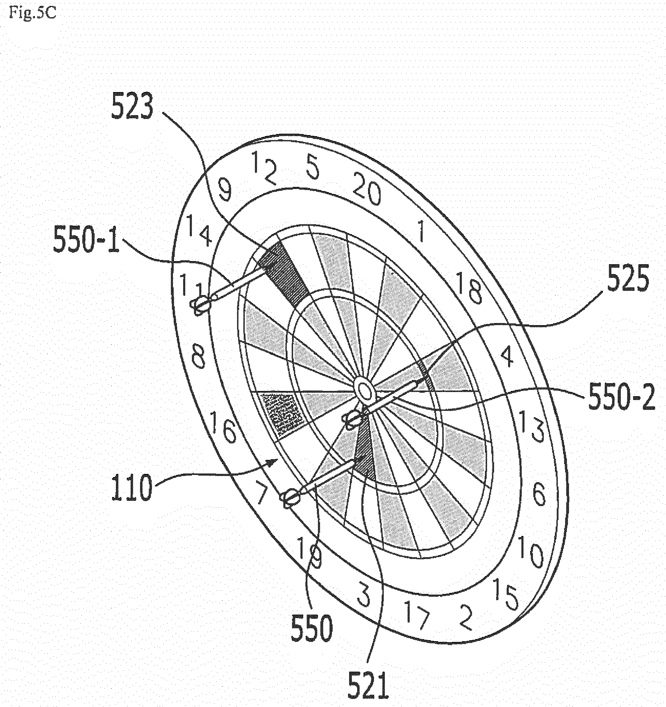

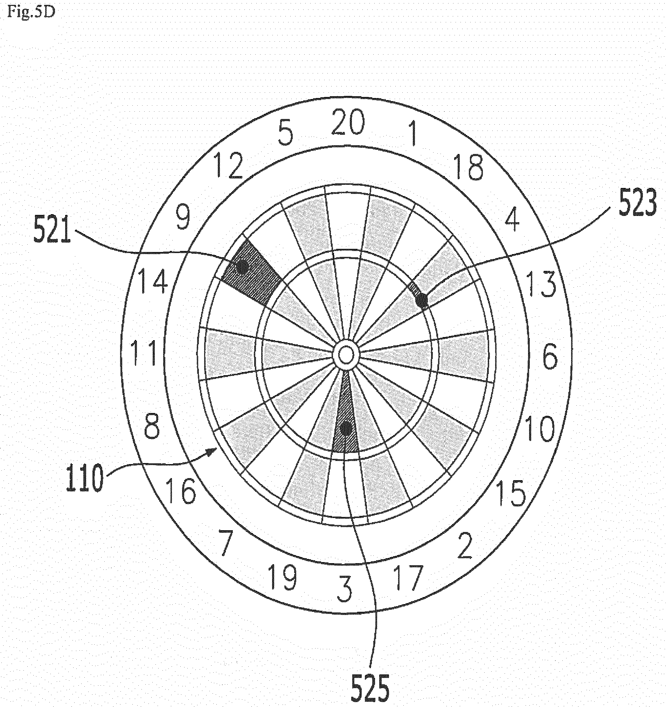

According to the exemplary embodiment of the present disclosure, the hitting area of the dart pin may be calculated based on the hitting location of the dart pin, which is judged through step 401 (403). This will be described below in more detail in FIG. 5.

According to the additional exemplary embodiment of the present disclosure, the dart game score may be calculated based on the hitting area calculated through step 403 and a predetermined logic (405).

The score calculated through step 405 is transmitted to the dart game apparatus 100 and a user device (not illustrated) which are communicatable with the dart server 300 (see FIG. 3) and the network 200 to be provided to the dart game player (407). The score may be intuitively expressed by a text (script) and/or a graphic interface, etc.

Through the aforementioned process, various dart game modes according to the hitting area based on the location of the dart pin may be provided. Hereinafter, various dart game modes according to the hitting area based on the location of the dart pin will be described in detail.

FIG. 5A exemplarily illustrates dart pins which stuck in a dart target.

FIG. 5B exemplarily illustrates a first exemplary embodiment for calculating a hitting area based on a location of a dart pin.

Referring to FIG. 5A, the sensing unit 120 and/or the location identification unit 121 may identify the locations of dart pins 510, 510-1 and 510-2 which stick in the dart target 110.

Referring to FIGS. 5A and 5B, a predetermined figure may be formed by connecting the hitting locations of the dart pins 510, 510-1 and 510-2 identified by the location identification unit 121. Therefore, the hitting area of the dart pin thrown by the dart game player may be calculated by an area 520 of the formed figure.

In FIGS. 5A and 5B, an exemplary embodiment using three dart pins is illustrated, but the number of dart pins may be a predetermined number such as 4, 6, or the like. In this case, the figured formed by the dart pin which sticks may also be a predetermined shape such as a quadrangle, a start, or the like.

FIG. 5C exemplarily illustrates the dart pins which stick in the dart target.

FIG. 5D exemplarily illustrates a second exemplary embodiment for calculating the hitting area based on the location of the dart pin.

Referring to FIGS. 5C and 5D, the hitting locations of the dart pins 550, 550-1 and 550-2 may be identified based on the receiving grooves of the dart target, which correspond to the dart pins which stick, respectively. The hitting areas may be calculated based on segments 521, 523, and 525 of the dart target, which correspond to the dart pins 550, 550-1, and 550-2 which stick the dart target 110 identified by the location identification unit 121.

For example, the hitting areas may be calculated by the sum of respective areas of the segments 521, 523, and 525 of the dart target, which correspond to the dart pins 550, 550-1, and 550-2. Alternatively, in general, since the areas of the segments of 'bullseye area', 'double area', and 'triple area' of the dart target are small, a largest area is excluded among the segments hit per hitting opportunity which the dart game player has by reflecting the small areas to calculate the hitting areas.

Hereinafter, the present specification presents various dart game modes based on the hitting area of the predetermined figure formed by connecting the hitting locations of the identified dart pins by referring to FIGS. 5A to 5D.

FIG. 6 exemplarily illustrates a first exemplary embodiment of a dart game mode which may be provided to a player.

Referring to FIG. 6, the hitting area of the dart pin formed by the dart game player may be a triangle 610 or a quadrangle 620. Although not illustrated, the hitting area of the dart pin formed by the dart game player may be a star shape.

That is, when the dart pin may be thrown three times per hitting opportunity of the dart game player, a maximum of three dart pins may stick in the dart target 110. Therefore, the triangle 610 may be formed as the hitting area.

Furthermore, when the dart pin may be thrown four times per hitting opportunity of the dart game player, a maximum of four dart pins may stick in the dart target 110. Therefore, the quadrangle 620 may be formed as the hitting area.

Alternatively, since the dart game player may connect and form the hitting area until the game ends, even though the dart pin may be thrown three times per hitting opportunity of the dart game player, the quadrangle 620, a pentagon (not illustrated), and a star shape (not illustrated) may be formed as the hitting area. Further, in the case of a 2:2 play mode or 2:2:2 play mode, the hitting area may be continuously formed.

Through the aforementioned contents, various dart game play modes by the scoring method according to the hitting area based on the location of the dart pin may be presented. Therefore, the entertainment elements of the dart game may be increased.

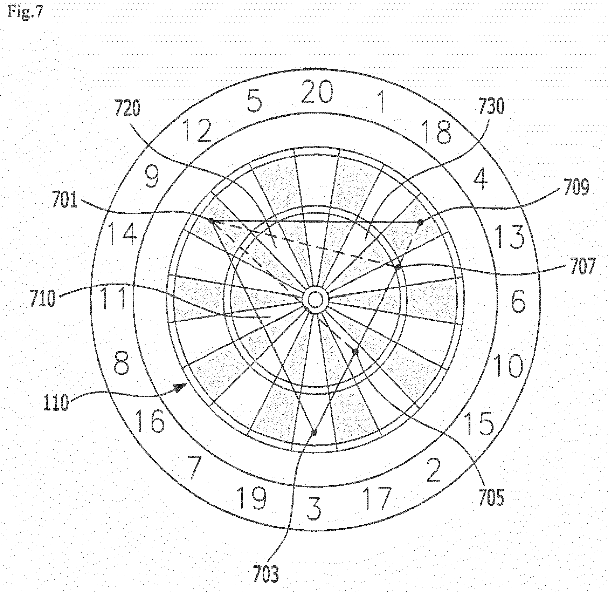

FIG. 7 exemplarily illustrates a second exemplary embodiment of the dart game mode which may be provided to the player.

Referring to FIG. 7, it may be verified that hitting areas 710, 720, and 730 formed in the dart target 110 are areas generated by connecting the hitting locations of the dart pins thrown by the dart game player. In more detail, it may be verified that the hitting area 710 is formed by connecting hitting locations 701, 703, and 705 of the dart pins. Further, it may be verified that the hitting area 720 is formed by connecting the hitting locations 701, 703, and 707 of the dart pins. It may be verified that the hitting area 730 is formed by connecting hitting locations 701, 703, and 709 of the dart pins. That is, it may be verified that the hitting area 730 has the largest hitting area and the hitting area 710 has the smallest hitting area.

Based on the predetermined logic according to the exemplary embodiment of the present disclosure, as the hitting area formed by the dart pin increases, the additional point may be granted.

That is, as the additional point granted to the hitting area 730, an additional point which is larger than the additional point granted to the hitting area 710 may be granted. Further, the additional point granted to the hitting area 710, which is smaller than the additional point granted to the hitting area 720 may be granted.

The aforementioned predetermined logic may be characterized in that as the hitting area formed by the dart pin increases, the additional point is granted.

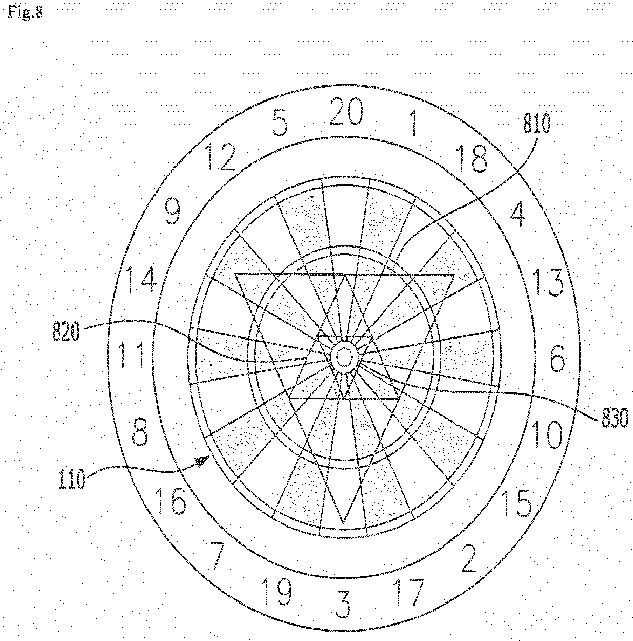

On the contrary, the predetermined logic may be characterized in that as the hitting area formed by the dart pin decreases, the additional point is granted. This will be described below in FIG. 8.

FIG. 8 exemplarily illustrates a third exemplary embodiment of the dart game mode which may be provided to the player.

Referring to FIG. 8, it may be verified that hitting areas 810, 820, and 830 formed in the dart target 110 are areas generated by connecting the hitting locations of the dart pins thrown by the dart game player. In particular, it may be verified that the hitting area 810 has the largest hitting area and the hitting area 830 has the smallest hitting area.

Based on the predetermined logic according to the exemplary embodiment of the present disclosure, as the hitting area formed by the dart pin decreases, the additional point may be granted.

That is, as the additional point granted to the hitting area 830, an additional point which is larger than the additional points granted to the hitting areas 810 and 820 may be granted. This reflects that advanced training is required in detailed hitting, and as a result, a game mode such as hitting a smaller and smaller area, or the like may be provided.

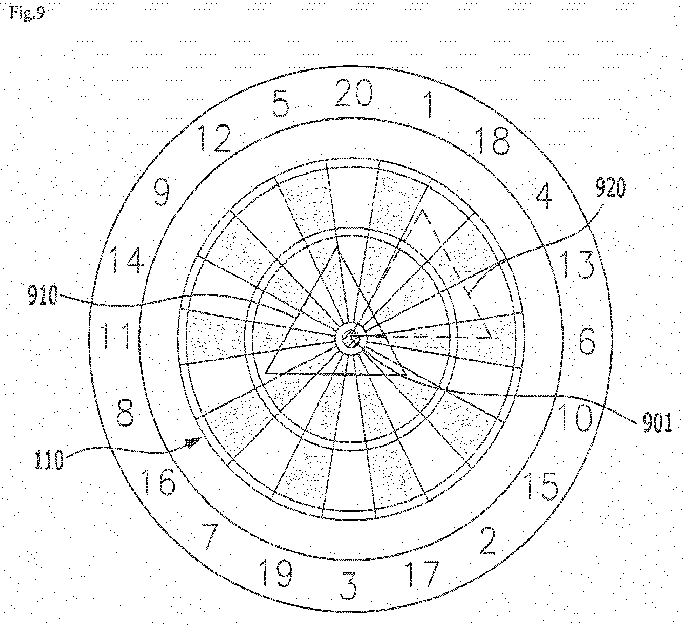

FIG. 9 exemplarily illustrates a fourth exemplary embodiment of the dart game mode which may be provided to the player.

Referring to FIG. 9, it may be verified that hitting areas 910 and 920 formed in the dart target 110 are areas generated by connecting the hitting locations of the dart pins thrown by the dart game player. In particular, it can be seen that the hitting area 920 having a 'bullseye 901' which a dead center area of the dart target 110 as an apex is generated.

Based on the predetermined logic according to the exemplary embodiment of the present disclosure, when the hitting area is formed at a predetermined location of the dart target by the thrown dart pin, a weighted value may be granted.

That is, the dart game apparatus 100 (see FIG. 1) may present the dart game player to directly hit the dart pin at a specific location of the dart target 110 in order to form the hitting area by the thrown dart pin. For example, the dart game apparatus 100 may present the bullseye 901 as one apex forming the hitting area.

Referring to FIG. 9, it may be verified that in the hitting area 910, the bullseye 901 may not be directly hit and in the hitting area 920, the bullseye 901 is directly hit. Therefore, since the additional points granted to the hitting areas 910 and 920, respectively are different from each other even though widths of the hitting areas 910 and 920 are the same as each other, different scores may be calculated. That is, in this case, a score which is larger than the score of the hitting area 910 may be granted to the hitting area 920.

Additionally, when the hitting areas formed by the thrown dart pins include the predetermined location of the dart target, the weighted value may be granted. For example, since the formed hitting area 910 includes the bullseye 901 therein in the case of the hitting area 910, the weighted value may be granted to the hitting area 910.

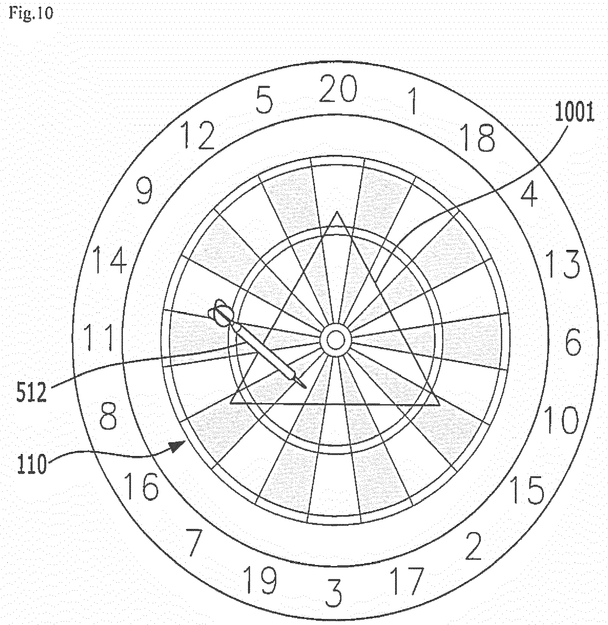

FIG. 10 exemplarily illustrates a fifth exemplary embodiment of the dart game mode which may be provided to the player.

Referring to FIG. 10, it may be verified that a hitting area 1001 formed by the dart target 110 is an area generated by connecting the hitting locations of the dart pins thrown by the dart game player.

In more detail, the hitting area 1001 illustrated in FIG. 10 may be a hitting area formed by the dart pin thrown by the first player. Further, a dart pin 512 may be a dart pin thrown by the second player.

Based on the predetermined logic according to the exemplary embodiment of the present disclosure, the hitting area formed by the dart pin thrown by the first player may be determined as a score area in which the score is granted only to the first player within a predetermined period.

That is, as illustrated in FIG. 10, when the dart pin 512 thrown by the second player sticks in a target area included in the hitting area 1001 formed by the dart pin thrown by the first player, the score may not be provided to the second player. Therefore, even though the second player directly hits the dart pin at a single 7 area, 7 points may not be added to a dart score of the second player.

Efficacy of the predetermined logic may be maintained only within a predetermined period. For example, throwing the dart pin three times may be set as the predetermined period. Alternatively, performing a dart hitting opportunity of throwing the dart pin three times three times may be set as the predetermined period. Alternatively, a period from the start of the game up to the end of the game may be set as the predetermined period.

Therefore, when performing a dart hitting opportunity of throwing the dart pin three times three times is set as the predetermined period, the efficacy of the score area formed previously may be lost in the case where the dart throwing opportunity of throwing the dart pin is performed for the fourth time.

That is, in the case where the dart hitting opportunity of throwing the dart pin three times is performed for the fourth time, the hitting area 1001 formed by the dart pin thrown by the first player is not determined as a unique score acquisition area of the first player any longer. Therefore, in the case where the dart hitting opportunity of throwing the dart pin three times is performed for the fourth time, the second player may throw the dart pin so as to acquire the hitting area 1001 formed by the dart pin previously thrown by the first player as his/her score acquisition area.

Based on the predetermined logic according to the additional exemplary embodiment of the present disclosure, when the dart pin thrown from the second player sticks in the hitting area formed by the dart pin thrown by the first player, the corresponding hitting area may be determined as a score area where the penalty is granted to the second player.

That is, when the dart pin 512 thrown by the second player directly hits the hitting area included in the hitting area 1001 formed by the dart pin thrown by the first player, the penalty may be granted to the second player. That is, even though the second player directly hits the dart pin at the single 7 area, 7 points may not be added to the dart score of the second player and -7 points may be granted as the penalty. The aforementioned penalty is just an example according to the exemplary embodiment of the present disclosure and the penalty may be granted by various methods.

According to the additional exemplary embodiment of the present disclosure, the hitting areas formed by the three dart pins thrown by the first player may be determined as a hitting area in which the second player may acquire the score by throwing the dart pin within a predetermined period. For example, only when the dart pin thrown by the second player enters an area set by the first player, the score may be granted. That is, referring to FIG. 10, only when the dart pin 512 thrown by the second player sticks in the hitting area 1001 formed by the dart pin thrown by the first player, the score may be granted. Further, after a predetermined period, the second player may be allowed to generate the target area where the first player may acquire the score to cause the dart game player to induce an interest.

In more detail, the first player throws the dart pin three times or more, and as a result, the hitting area for the second player may be formed. Then, only when the second player throws the dart pin within the area formed by the first player, the score corresponding to the corresponding segment may be provided to the second player. After one turn ends, the second player throws the dart pin three times or more, and as a result, the hitting area for the first player may be formed. Then, only when the first player throws the dart pin within the area formed by the second player, the score corresponding to the corresponding segment may be provided to the first player.

Therefore, from the viewpoint of the player that forms the hitting area of the dart pin, a follow-up player may not acquire the score by minimally reducing the area and the follow-up player needs to throw the dart pin within the formed area, and as a result, the dart game mode according to an aspect of the present disclosure may further increase a fun of the dart game.

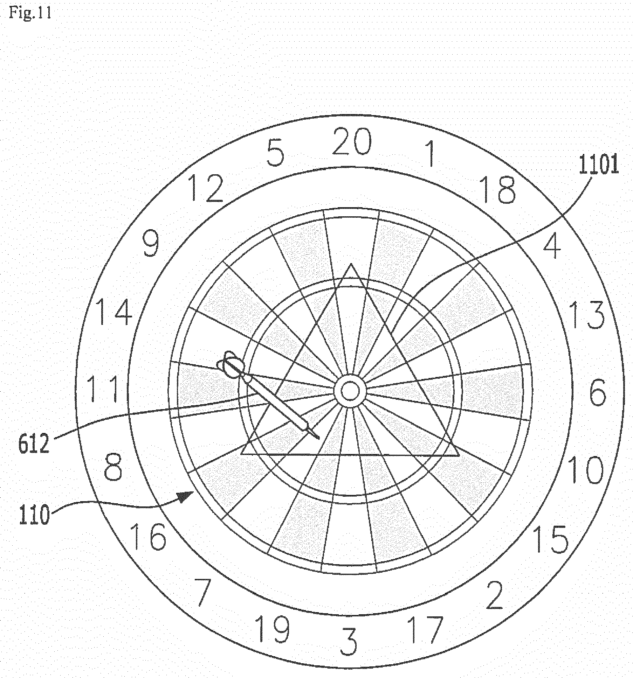

FIG. 11 exemplarily illustrates a sixth exemplary embodiment of the dart game mode which may be provided to the player.

Referring to FIG. 11, it may be verified that a hitting area 1101 formed by the dart target 110 is an area generated by connecting the hitting locations of the dart pins thrown by the dart game player.

Based on the predetermined logic according to the additional exemplary embodiment of the present disclosure, the hitting area formed by the dart pin thrown by the first player may be determined as a score area in which the weighted value is granted to the first player within a predetermined period.

That is, when a dart pin 612 thrown by the first player directly hits the target area included in the hitting area 1101 formed by the dart pin thrown by the first player, the weighted value may be granted to the first player. That is, even though the first player directly hits the dart pin at the single 7 area, 7 points or more may be added to the dart score of the first player.

As described above, according to the present disclosure, the score of the dart game is calculated in a more entertaining manner to enhance a pleasure of the dart game player. Further, various dart game methods may be proposed.

It will be appreciated by those skilled in the art that information and signals may be expressed by using various different predetermined technologies and techniques. For example, data, instructions, commands, information, signals, bits, symbols, and chips which may be referred in the above description may be implemented by voltages, currents, electromagnetic waves, magnetic fields or particles, optical fields or particles, or predetermined combinations thereof.

Those skilled in the art of the present disclosure will appreciate that various exemplary logic blocks, modules, processors, means, circuits, and algorithm steps can be implemented by electronic hardware, various types of programs or design codes (designated as "software" herein for easy description), or a combination thereof described in association with the embodiments disclosed herein.

In order to clearly describe the intercompatibility of the hardware and the software, various exemplary components, blocks, modules, circuits, and steps have been generally described above in association with functions thereof. Whether the functions are implemented as the hardware or software depends on design restrictions given to a specific application and an entire system.

Those skilled in the art of the present disclosure may implement functions described by various methods with respect to each specific application, but it should not be analyzed that the implementation determination departs from the scope of the present disclosure.

Various exemplary embodiments presented herein may be implemented as manufactured articles using a method, an apparatus, or a standard programming and/or engineering technique. The term "manufactured article" includes a computer program, a carrier, or a medium which is accessible by a predetermined computer-readable device.

For example, a computer-readable medium includes a magnetic storage device (for example, a hard disk, a floppy disk, a magnetic strip, or the like), an optical disk (for example, a CD, a DVD, or the like), a smart card, and a flash memory device (for example, an EEPROM, a card, a stick, a key drive, or the like), but is not limited thereto.

Various storage media presented herein include one or more devices and/or other machine-readable media for storing information. The term "machine-readable media" include a wireless channel and various other media that can store, posses, and/or transfer command(s) and/or data, but are not limited thereto.

It will be appreciated that a specific order or a hierarchical structure of steps in the presented processes is one example of exemplary accesses. It will be appreciated that the specific order or the hierarchical structure of the steps in the processes within the scope of the present disclosure may be rearranged based on design priorities. Appended method claims provide elements of various steps in a sample order, but it does not mean that the method claims are limited to the presented specific order or hierarchical structure.

The description of the presented exemplary embodiments is provided so that those skilled in the art of the present disclosure use or implement the present disclosure. Various modifications of the exemplary embodiments will be apparent to those skilled in the art and general principles defined herein can be applied to other exemplary embodiments without departing from the scope of the present disclosure. Therefore, the present disclosure is not limited to the exemplary embodiments presented herein, but should be analyzed within the widest range which is coherent with the principles and new features presented herein.

### [Mode for Invention]

Contents associated with a best mode for carrying out the present disclosure have been described.

### [Industrial Applicability]

The present disclosure can be used in a digital device, a dart device, a dart game device, an entertainment device, a dart server, and the like.

## Claims

1. A computer program stored in a computer readable medium,
wherein the computer program includes commands which cause a computer to execute steps, the steps comprising:
judging hitting locations of one or more dart pins which stick in a dart target having a plurality of score areas;
calculating hitting areas of the dart pin based on the judged hitting locations of the dart pins; and
calculating scores based on the hitting areas and a predetermined logic.

2. The computer program of claim 1, wherein in the judging of the hitting locations of the dart pins, the hitting locations of the dart pins are judged based on location identification modules included in the dart pins.

3. The computer program of claim 1, wherein in the judging of the hitting locations of the dart pins, the hitting locations of the dart pins are judged based on receiving grooves of the dart target, which correspond to the dart pins which stick.

4. The computer program of claim 1, wherein in the calculating of the hitting areas of the dart pins, an area of a figure formed by connecting the hitting locations of the dart pins is calculated.

5. The computer program of claim 1, wherein in the calculating of the hitting areas of the dart pins, the hitting area is calculated based on a segment of the dart target, which corresponds to the dart pin which sticks.

6. The computer program of claim 1, wherein in the predetermined logic, as the hitting area formed by the dart pin increases, an additional point is granted.

7. The computer program of claim 1, wherein in the predetermined logic, as the hitting area formed by the dart pin decreases, the additional point is granted.

8. The computer program of claim 1, wherein in the predetermined logic, the hitting area formed by the dart pin thrown by a first player is determined as a score area in which the score is granted only to the first player within a predetermined period.

9. The computer program of claim 1, wherein in the predetermined logic, the hitting area formed by the dart pin thrown by the first player is determined as a score area in which a weighted value is granted to the first player within a predetermined period.

10. The computer program of claim 1, wherein in the predetermined logic, when a dart pin thrown from a second player sticks in the hitting area formed by the dart pin thrown by the first player, a penalty is granted to the second player.

11. The computer program of claim 1, wherein in the predetermined logic, when the hitting area is formed by a dart pin which is thrown to a predetermined location of the dart target, a weighted value is granted.

12. A dart game server comprising:
a location identification unit judging a hitting location of a dart pin which sticks in a dart target area;
a hitting area calculation unit calculating a hitting area of the dart pin according to a hitting location of the dart pin identified by the location identification unit; and
a database unit storing dart game information and a predetermined logic for a plurality of missions for the dart game.

13. A dart game apparatus comprising:
a dart target having a plurality of score areas;
a location identification unit judging hitting locations of one or more dart pins which stick in the dart target;
a hitting area calculation unit calculating hitting areas of the dart pin based on the judged hitting locations of the dart pins; and
a score calculation unit calculating scores based on the calculated hitting areas and a predetermined logic.
